# EUROPÄISCHE PATENTSCHRIFT

(11) **EP 0 915 777 B1**
(45) Veröffentlichungstag und Bekanntmachung des Hinweises auf die Patenterteilung: **27.09.2000**
(21) Anmeldenummer: 97930287.4
(22) Anmeldetag: 23.07.1997
(51) Int. Cl.: B60P 1/44

(54) **PLATTFORM, INSBESONDERE LADEBORDWAND FÜR FAHRZEUGE**
PLATFORM, IN PARTICULAR LOADING TAILBOARD FOR VEHICLES
PLATE-FORME, NOTAMMENT CHARGEUSE LATERALE HYDRAULIQUE POUR VEHICULE

(30) Priorität: 02.08.1996 DE 19631184; 14.08.1996 DE 19632725
(43) Veröffentlichungstag der Anmeldung: 19.05.1999
(73) Patentinhaber: Peter Maier Leichtbau GmbH, 78224 Singen (DE)
(72) Erfinder: KEMEN, Hans-Jörgen, D-78224 Singen (DE); MAIER, Peter, D-78256 Steisslingen (DE)
(74) Vertreter: Weiss, Peter, Dr. rer. nat.
(86) Internationale Anmeldenummer: CH9700281
(87) Internationale Veröffentlichungsnummer: WO9805528

(56) Entgegenhaltungen:
- EP-A- 0 081 115
- BE-A- 1 006 514
- DE-C- 3 537 938
- FR-A- 2 704 300
- US-A- 4 569 626

## Beschreibung

Die Erfindung betrifft eine Plattform, insbesondere eine Ladebordwand für Fahrzeuge, nach dem Oberbegriff des Patentanspruches 1.

Eine derartige Plattform wird durch die FR 2 704 300 A1 angeboten. Eine dort dargestellte Auffahrschiene ist aus stranggepreßten Profilen zusammengesetzt, von deren Querschnittsenden an den Ober- und Untergurten Anschlußrippen und Endleisten abstehen. Auch wird eine einstückige, sich zur freien Endkante hin verjüngende Ladebordwand angeboten.

Eine schwenkbare Plattform mit quer zu ihrer Gesamthöhe verlaufenden Hohlkammerprofilen, von denen das anschlußnahe sich konisch erweitert, beschreibt die US-A-4,569,626. In diesen erweiterten Profilabschnitt ist zumindest eine Randausnehmung eingeformt, welche einen Gelenkkasten mit zwei zueinander höhenversetzten Achsen aufnimmt; deren eine dient als Scharnierachse für die Plattform, wohingegen die zweite Achse an eine hydraulisch betätigte Hubeinrichtung angeschlossen ist.

Eine einseitig anhängbare Fahrzeug-Hubwand mit trogförmigem Anschlußprofil, das an seiner offenen Seite von den Enden der quer zu ihm langgelegten Plattformprofile abgedeckt und mit abkragenden Anschlußlaschen ausgerüstet ist, kann der EP-A-081 115 entnommen werden. Die Anschlußlaschen bieten Bohrungen als Augen für Gelenkbolzen an. Das trogförmige Anschlußprofil soll mittels Schrauben an den Enden der Plattformprofile festliegen; jene Anschlußlaschen aufweisende Anschlußblöcke werden angeschweißt.

Übliche Anschlußblöcke aus Stahl werden an Leichtmetall-Hohlprofilen durch Verbindungsorgane wie Schrauben gehalten, wobei sich besondere Probleme am Übergang des Anschlußblockes zur eigentlichen Plattformfläche bezüglich der Einleitung von Kräften bei Kragbelastung ergeben, insbesondere im Hinblick auf die den jeweiligen Verhältnissen anzupassende Lage der Fahrfläche, welche von der im ausgeklappten Zustand nach oben weisenden Oberfläche der Plattform angeboten wird. Ein häufiger Nachteil ist das Fehlen der Möglichkeit, die Anschlußblöcke nach längerem Gebrauch der Plattform von dieser problemlos lösen zu können.

Bekannte Plattformen bzw. Ladebordwände werden für den jeweiligen Einzelfall gefertigt, eine Herstellung in Serie ist nur in sehr beschränktem Rahmen möglich.

Angesichts dieser Gegebenheiten hat sich der Erfinder das Ziel gesetzt, Plattformen bzw. Ladebordwände der eingangs erwähnten Art bei Meidung der erkannten Mängel insbesondere dadurch zu verbessern, daß die Variationsbreite für die aus den Profilen zusammenzustellende Fläche erhöht sowie die Lagerhaltung sowie der Aufwand für das Zusammenfügen der Profile und deren Anschluß vermindert werden.

Zur Lösung dieser Aufgabe führt die Lehre des unabhängigen Patentanspruches; die Unteransprüche geben günstige Weiterbildungen an.

Erfindungsgemäß bildet wenigstens eine Anschlußrippe eines Profiles mit einer in Abstand zugeordneten Lippenleiste einen Klemmschlitz für eine in diesen einzuführende Endleiste des benachbarten Profils, um das Zusammenführen zweier Profile zu vereinfachen. Darüber hinaus wird der Einschubvorgang erleichtert, wenn sich der Klemmschlitz querschnittlich nach außen erweitert, insbesondere sich die Lippenleiste nach außen krümmt. Die Anschlußrippen eines Profiles sollen den Endleisten des anschließenden Profiles außenseitig anliegen und so mit diesen eine Verbindungspaarung darstellen, die wenigstens kurzfristig klemmend hält, bis die beide Profile verbindende Schweißnaht gesetzt ist.

Da die parallelen Hohlprofile verschweißt werden, hat sich für den Schweißvorgang als günstig erwiesen, die Anschlußrippe mit der Lippenleiste als sog. Schweißfuge zu gestalten, der die Endleiste des benachbarten Profils als sog. Badstütze zugeordnet ist. Dank dieser Maßgabe kann ein Versetzen der thermisch beeinflußten Partner verhindert werden; Anschlußrippe und Lippenleiste nehmen die Endleiste in sich auf, wie dies etwa beim Kalt- und Warmpreßschweißen von Leichtmetall zum Fügen von Strangpreßprofilen seit langem bekannt ist, und die Endleiste verhindert zudem das Abfließen von Schweißgut aus der Schweißfuge beim thermischen Verbinden.

Die Form des Profils mit einer einzigen endwärtigen Stegwand als Spreizelement -- auch für das benachbarte Profil -- trägt zur Gewichtseinsparung erheblich bei; die erörterte, nach unten gebogene Lippenleiste erlaubt die schnelle Anpassung des freien Endes zumindest des Obergurtes des anderen Profils.

Im Rahmen der Erfindung liegt vor allem die Variationsfähigkeit beim Zusammenfügen von Ladebordwänden aus den Profilen; man kann mit nur wenigen von ihnen eine Vielzahl von unterschiedlichen Bordwandhöhen darstellen.

Die Maßgabe, daß Zwischenprofile für zwei unterschiedliche Anschlußhöhen eingesetzt werden, ist ebenso wichtig wie die Vorgabe unterschiedlicher Profilbreiten diese Zwischenprofile.

Zu dem Konzept eines Bausatzes für Ladebordwänden gehört auch, daß wenigstens ein Zwischenprofil in sich gleichbleibender Anschlußhöhe als beidseits festgelegtes Verbindungselement zwischen einem das Anschlußorgan aufweisenden Anschlußprofil und einem der sich verjüngenden Plattformprofile angeordnet ist. Zudem soll nach Wahl mindestens ein Zwischenprofil -- also ein Profil mit in sich gleichbleibender Anschlußhöhe -- als beidseits festgelegtes Verbindungselement zwischen zwei der querschnittlich konischen Plattformprofile angeordnet werden.

Die sich fortlaufend verjüngenden Hohlprofile finden sich übrigens als Kernteil der Konstruktion in jeder der Kombinationen; die Zwischenprofile sind als die variablen "Bausteine" anzusehen.

Durch die Möglichkeit, beispielsweise mit acht verschiedenen Profilen alle Bordwandhöhen zusammenstellen zu können, wird aufgabengemäß die Produktion vereinfacht sowie die Lagerhaltung vermindert.

Die Ausbildung der Anschlußköpfe und deren Bindung an das Anschlußprofil ist für die Handhabung der Plattform von Bedeutung.

In einem Falle wird ein Anschlußkopf aus Stahl eingesetzt mit einer Sockelplatte, die mit einem zum Obergurt des Anschlußprofils in einem Winkel geneigten Profilsteg verschraubt ist und von der in rechtwinkeligen Ebenen -- die Achsaugen enthaltende -- Anschlußlaschen abragen.

Erfindungsgemäß wird ein Anschlußkopf in Form eines Strangpreßprofils aus einer Aluminiumlegierung und mit wenigstens einem ein Auge anbietenden Zylinderbereich bevorzugt; dieser Anschlußkopf ist mit seinem Anschlußprofil sowohl formschlüssig als auch kraftschlüssig verbunden.

In der einen Ausgestaltung dieses Anschlußkopfes ist an seinen Zylinderbereich eine Kammrippe mit abwärts geneigter Schrägfläche angeformt, die einer gegenläufigen Pultfläche an der Randausnehmung des Anschlußprofils aufliegt; der Anschlußkopf ist andernends mit einem in einem Neigungswinkel zum Obergurt geneigten Profilsteg des Anschlußprofils so verschraubt, daß er die Flächenpaarung aufeinanderpreßt.

Bei einer anderen Ausführung steht von dem Zylinderbereich des Anschlußkopfes eine Rippe ab und sitzt in einer Nut des Anschlußprofils; auch hier wird die Rippe dadurch in die Nut gepreßt, daß der Anschlußkopf andernends mit einem in jenem Neigungswinkel zum Obergurt verlaufenden Profilsteg des Anschlußprofils verschraubt ist.

Jene Nut ist etwa dreiecksförmig und verläuft in einer Anformung des Obergurtes.

Auch hat es sich als günstig erwiesen, den Anschlußkopf mit dem Obergurt nahe des Zylinderbereiches zusätzlich zu verschrauben.

Für die kraftschlüssige Verbindung ist im einen Fall an dem Zylinderabschnitt etwa tangential zu dessen Auge und als Begrenzung von dessen Schrägfläche ein Steg angeformt und zur Anlage an den Profilsteg endwärts abgewinkelt. In der anderen Ausführungsform ist ein Mittelsteg an den Zylinderbereich etwa in einer Durchmesserebene angeformt und ebenfalls zur Anlage an den Profilsteg endwärts abgewinkelt.

Insgesamt wird die vom Erfinder gesehene Aufgabe sowohl durch die Ausbildung der Hohlprofile als auch durch deren Abstimmung aufeinander in bestechender Weise gelöst.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
- Fig. 1 bis Fig. 4:: Seitenansichten von Ladebordwänden unterschiedlicher Zusammensetzung und Länge;
- Fig. 5:: ein vergrößertes Detail der Fig. 2, 3;
- Fig. 6:: einen vergrößerten Ausschnitt aus Fig. 5 mit voneinander distanziert skizzierten Profilteilen;
- Fig. 7, 8:: Draufsicht und Seitenansicht zu einem Profil der Ladebordwand;
- Fig. 9:: einen gegenüber Fig. 1 bis 5 vergrößerten Abschnitt einer Ladebordwand mit Anschlußkopf;
- Fig. 10:: eine Schrägsicht auf einen geschnittenen Anschlußkopf;
- Fig. 11:: das vergrößerte Profil der Fig. 8;
- Fig. 12:: einen Anschlußkopf für das Profil der Fig. 11 in Seitenansicht;
- Fig. 13, 14:: Seitenansichten zweier Ladebordwandabschnitte mit Anschlußköpfen.

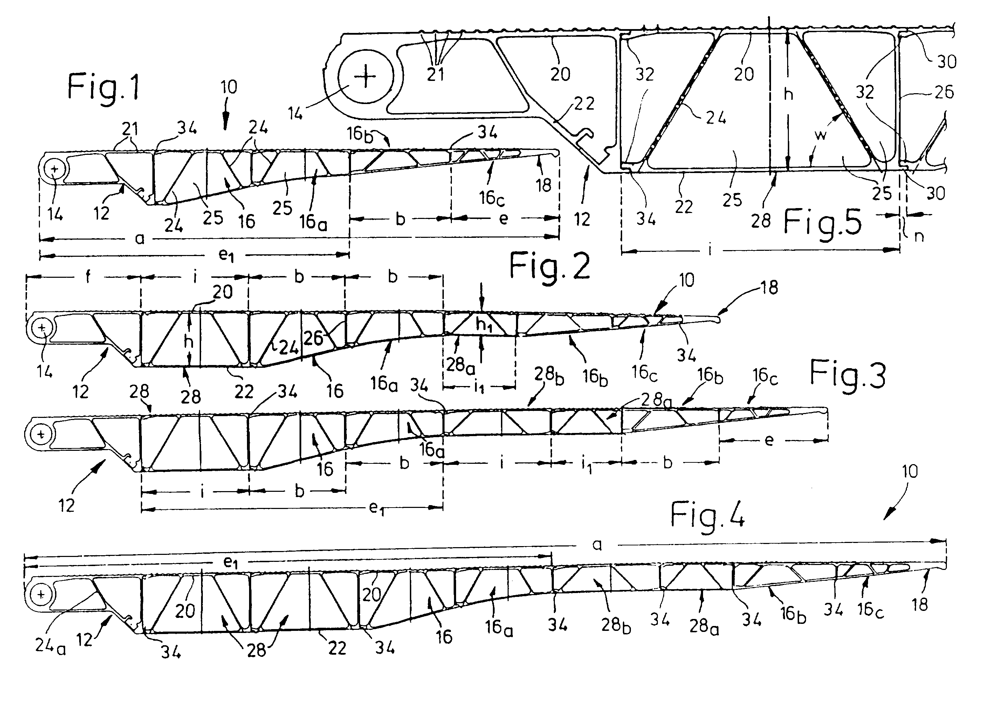

Eine Ladebordwand 10 der Gesamthöhe a besteht in der Ausführung nach Fig. 1 aus einem -- zu einem nicht weiter dargestellten Lastwagenaufbau gerichteten -- Anschlußprofil 12 mit Achsauge 14, vier Plattformprofilen 16, 16ₐ bis 16_{c} konischen Querschnittes sowie einer heckwärtigen Auffahrzunge 18. Nicht erkennbar sind seitliche Flankenelemente, welche das Anschlußprofil 12 sowie die Plattformprofile 16, 16ₐ bis 16_{c} beidseits abdecken.

Die Breite b der konischen Plattformprofile 16, 16ₐ, 16_{b} mißt jeweils etwa 180 mm bzw. 200 mm, die Breite e des Endbereiches aus dem in Fig. 1 rechten konischen Plattformprofil 16_{c} und der Auffahrzunge 18 etwa 420 mm sowie die Breite f des Anschlußprofils 12 hier 220 mm. Die Breite eᵢ der sog. Anschlußgruppe vom freien Ende des Anschlußprofils 12 bis zu dem diesem fernen Ende des zweiten konischen Plattformprofils 16ₐ beträgt 580 mm.

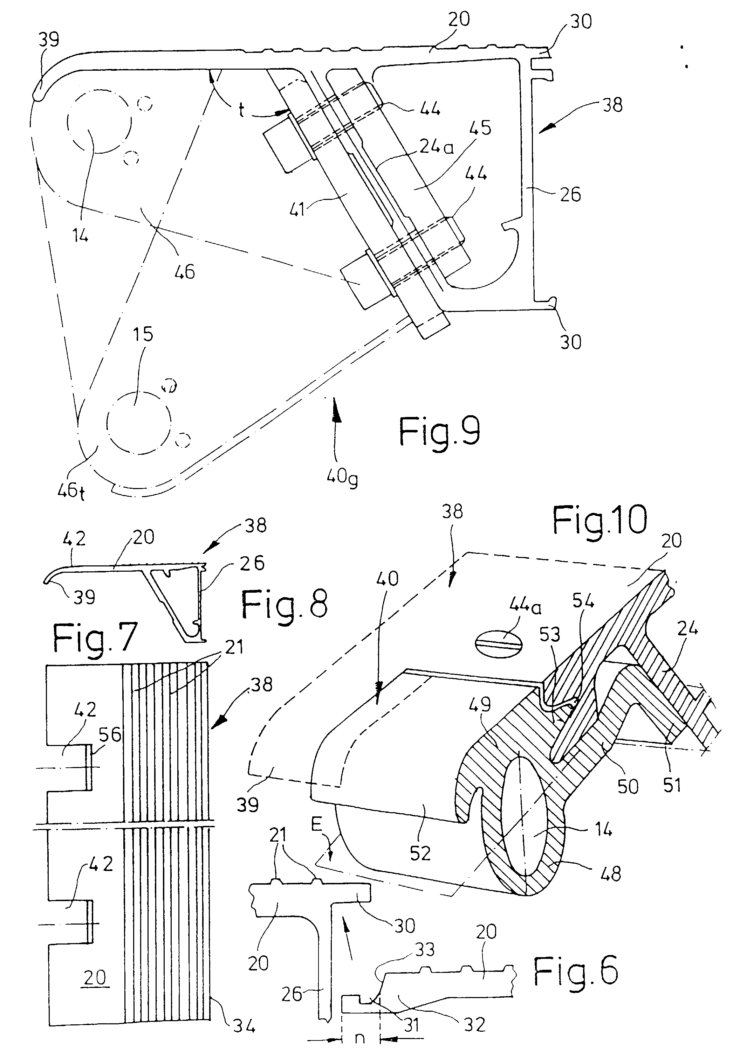

Die Plattformprofile 16, 16ₐ bis 16_{c} sind aus einer Aluminiumlegierung als stranggepreßte Hohlkammerprofile gefertigt mit jeweils einer Firstwand 20 als Obergurt sowie einer Bodenwand 22 als Untergurt, welche beide zum einen durch zueinander -- in einem Winkel w zur Bodenwand 22 -- geneigte Querstege 24 verbunden sind, die eine Innenkammer 25 begrenzen, sowie anderseits durch eine in Fig. 5 an der rechten Profilseite liegende Stegwand 26. Die Firstwand 20 ist an ihrer Außenfläche mit angeformten Querrippen 21 als Rutschsicherung versehen.

Zur Vermehrung der Gesamthöhe a ist in Fig. 2, 3, 5 zwischen Anschlußprofil 12 und dem benachbarten konischen Plattformprofil 16 ein Zwischenprofil 28 der beidseitigen Anschlußhöhe h und der Breite i von 200 mm mit paralleler First- und Bodenwand 20, 22 eingesetzt, zudem in Fig. 2 zwischen zwei konischen Plattformprofilen 16ₐ und 16_{b} ein weiteres Zwischenprofil 28ₐ geringerer -- ebenfalls gleichbleibender -- Anschlußhöhe h₁ und verminderter Breite i₁ von 180 mm.

In der Ladebordwand 10 der Fig. 3 sind zwischen zwei konischen Plattformprofilen 16ₐ, 16_{b} zwei Zwischenprofile 28ₐ, 28_{b} der Anschlußhöhe h₁ vorgesehen. Die Breite des Zwischenprofils 28_{b} entspricht jener des anschlußnahen Zwischenprofils 28.

Zusammen mit dem Anschlußprofil 12 stets gleicher Breite f von 220 mm lassen sich durch die Auswahl an Zwischenprofilen 28, 28ₐ, 28_{b} unterschiedlicher Anschlußhöhen h, h₁ und verschiedener Einbaubreiten i, i₁ stufenweise wachsende Bordwandhöhen a darstellen; so mißt etwa beim Ausführungsbeispiel der Fig. 4 die Bordwandhöhe a 1.750 mm.

Die Auswahl kann noch dadurch vergrößert werden, daß man Zwischenprofile 28ₐ einer nicht gezeigten weiteren Breite i₂ -- beispielsweise von 150 mm -- einfügt.

Bevorzugt sind die folgend zusammengestellten Baugruppen, wobei die Breite e des Endbereiches 16_{c}/18 stets mit 420 mm angenommen sei (Maße in mm):

| **Ladebordwand 10** | **Anschlußgruppe 12/16/16**_{**a**} | **mit Zwischenprofil/en 28** | **Zwischenprofile 28**_{**a**}**/28**_{**b**} **zw. Anschlußgruppe und Endbereich** |
|---|---|---|---|
| **Gesamthöhe a** | **Breite e**_{**1**} | **Profilbreite i** | **Profilbreite i / i**_{**1**} |
| | | | |
| 1200 | 580 | -- | 1 x 200 |
| 1300 | 580 | -- | 2 x 150 |
| 1400 | 780 | 1 x 200 | 1 x 200 |
| 1500 | 780 | 1 x 200 | 2 x 150 |
| 1600 | 780 | 1 x 200 | 2 x 200 |
| 1700 | 780 | 1 x 200 | 200 und 2 x 150 |
| 1800 | 980 | 2 x 200 | 2 x 200 |
| 1900 | 980 | 2 x 200 | 200 und 2 x 150 |
| 2000 | 980 | 2 x 200 | 3 x 200 |
| 2100 | 1180 | 3 x 200 | 200 und 2 x 150 |
| 2200 | 1180 | 3 x 200 | 3 x 200 |
| 2300 | 1180 | 3 x 200 | 2 x 150 und 2 x 200 |

Es wird erkennbar, daß hier schon mit vier dieser Plattformprofile 16, 16ₐ bis 16_{c} sowie mit einem großen Zwischenprofil 28 der Breite i und der Anschlußhöhe h, drei niederen Zwischenprofilen 28ₐ, 28_{b} der Anschlußhöhen h₁ sowie der Querschnittsbreiten i, i₁, i₂ zumindest zwölf unterschiedliche Gesamthöhen zusammengesetzt werden können. Die Zwischenprofile 28, 28ₐ, 28_{b} sind die variabel eingesetzten Komponenten.

Selbstverständlich sind noch weitere Varianten möglich.

Jedes der beschriebenen Hohlkammerprofile 16, 16ₐ bis 16_{c} und 28, 28ₐ, 28_{b} weist -- wie vor allem Fig. 5 verdeutlicht -- an einem Profilende die zur Firstwand 20 rechtwinkelige Stegwand 26 auf, von der -- mit den Außenflächen von First- und Bodenwand 20, 22 fluchtend -- zwei parallele Anschlußrippen 30 der Länge n abragen.

Am anderen Querschnittsende des Hohlkammerprofils 16, 16ₐ bis 16_{c}, 28, 28ₐ, 28_{b} kragen First- und Bodenwand 20, 22 frei von dem einen geneigten Quersteg 24 ab und enden jeweils als aus ihnen verdickt herausgeformte Endleiste 32, die gemäß Fig. 6 einen Schulterabsatz 34 für eine jener Anschlußrippen 30 der benachbarten First- oder Bodenwand 20 oder 22 anbietet. An der von der Anschlußrippe 30 und dem Schulterabsatz 33 gebildeten Stoßlinie 34 sind die Hohlkammerprofile 12, 16, 16ₐ bis 16_{c}, 28, 28ₐ, 28_{b} -- wie auch die Auffahrzungen 18 -- verschweißt.

Bei einem nicht gezeigten Ausführungsbeispiel ist der Schulterabsatz nach innen gerichtet, d.h. die Anschlußrippen 30 sind von den Oberflächen der First- oder Bodenwand 20, 22 nach innen versetzt. Die Stoßlinie 34 ist dadurch nur geringfügig verschoben.

Beim Anschlußprofil 38 der Fig. 7, 8 wird das Achsauge 14 durch einen Anschlußkopf 40_{g} angeboten, der im Beispiel der Fig. 9 als Stahlteil ausgebildet ist, in Randausfräsungen 42 des Anschlußprofils 38 eingesetzt und mit einer zur Firstwand 20 in einem Neigungswinkel t von etwa 120° geneigten Sockelplatte 41 durch Zylinderschrauben 44 an einem gleichermaßen geneigten Profilsteg 24ₐ des Anschlußprofils 38 festgelegt wird; die Zylinderschrauben 44 enden in einer dem Profilsteg 24 hinterlegten Gewindeplatte 45.

Von der Sockelplatte 41 ragen nahe der Firstwand 20 obere Anschlußlaschen 46 mit den Achsaugen 14 für einen nicht gezeigten Gelenkbolzen ab sowie wenigstens eine untere Anschlußlasche 46ₜ, in deren Augöffnung 15 eine -- ebenfalls in der Zeichnung vernachläßigte -- Hydraulikeinrichtung angreift.

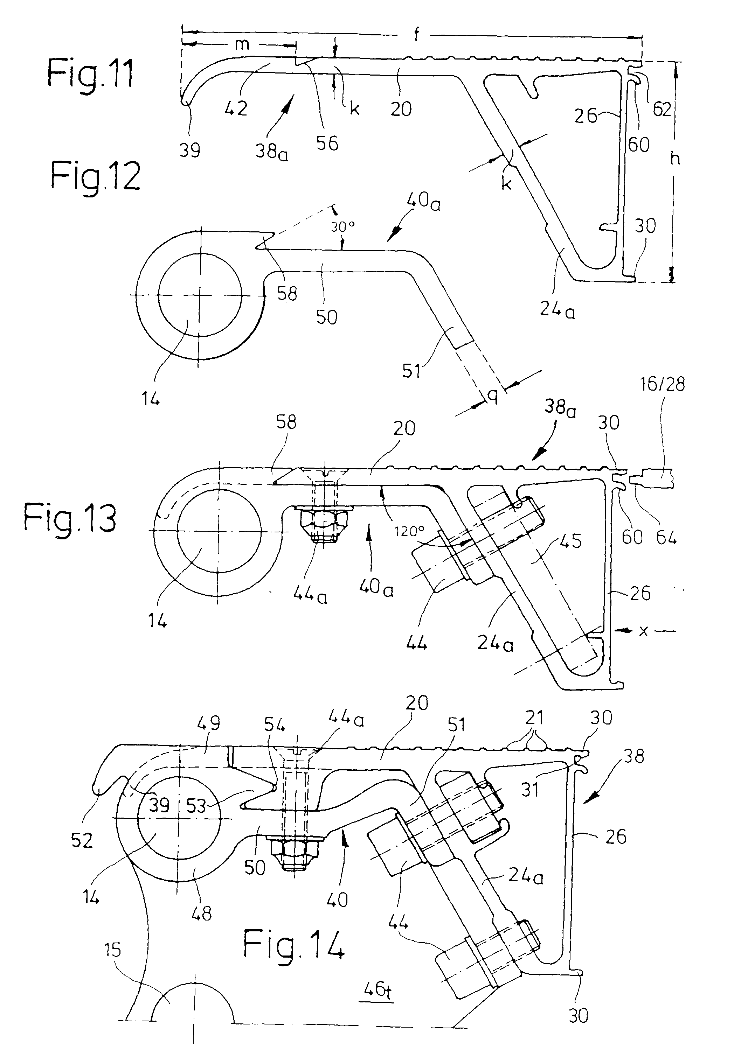

Der Anschlußkopf 40 der Fig. 10, 14 ist ein Abschnitt eines Strangpreßprofils mit an einen Zylinderbereich 48 etwa in einer Durchmesserebene E angeformtem Mittelsteg 50, dessen freies Ende abgewinkelt ist und dem geneigten Quersteg 24 als Stützfuß 51 der Dicke q von 10 mm anliegt. Zudem ragen von einer oberen Kammanformung 49 des Zylinderbereiches 48 -- in Fig. 10 nach vorn -- ein abwärts gekrümmter Nasensteg 52 sowie entgegengesetzt eine querschnittlich etwa dreiecksförmige Rippe 53 ab; letztere greift haltend in eine entsprechend geformte Nut 54 einer innenliegenden Anformung 55 des Anschlußprofils 38 ein. Dessen vordere, ebenfalls abwärts gekrümmte Nasenkante 39 ist gegenüber dem Nasensteg 52 des Anschlußkopfes 40 nach hinten versetzt (Fig. 14).

Das Anschlußprofil 38 ist mit dem Anschlußkopf 40 durch Schrauben 44ₐ verbunden, welche beispielsweise jene Anformung 55 durchsetzen.

Das Ausführungsbeispiel der Fig. 11 bis 13 zeigt ein Anschlußprofil 38ₐ der Breite f von etwa 218 mm und eine Anschlußhöhe von 107 mm; die Profildicke k der Firstwand 20 beträgt 8 mm, die Tiefe m der Randausfräsungen 42 hier 55 mm. Die Rückenkante der Randausfräsung 42 wird von einer geneigten Pultfläche 56 gebildet als Auflage für eine entsprechende Schrägfläche 57 einer Kammrippe 58 des Anschlußkopfes 40ₐ; diese Paarung 56/57 ersetzt die vorab beschriebene Rippe 53 und ihre Nut 54 im Anschlußprofil 38. Hier ist der Mittelsteg 50ₐ am Ende der Schrägfläche 57 etwa tangential zum Achsauge 14 angeformt.

In dieser Ausführung begrenzt die an die Stegwand 26 angeformte Anschlußrippe 30 mit einer dazu in Abstand etwa parallelen Lppenleiste 60 einen Klemmschlitz 62 für eine Einsatznase 64 des anzuschließenden Plattformprofils 16, 28. Die innenliegende Lippenleiste 60 ist -- unter Bildung einer Art von sich gegen die Einschubrichtung x öffnenden leistenlangem Einzugstrichter -- querschnittlich gebogen, um die einzuschiebene Einsatznase 64 besser erfassen und ausrichten zu können.

Die Anschlußrippe 30 bildet mit der parallelen Lippenleiste 60 zudem eine Gabelstütze, in die jene Einsatznase 64 als Badstütze eingeschoben wird; sie dient während eines Schweißvorganges zur Stützung des flüssigen Metalls zwischen den Partnern und hält das Abfließen flüssigen Schweißzusatzwerkstoffes aus dem Klemmschlitz 62 bzw. aus einer in der oberen Anschlußrippe 30 erkennbaren Hinterschneidung 31 (Fig. 14) hintan.

## Patentansprüche

1. Plattform, insbesondere Ladebordwand (10) für Fahrzeuge, aus mehreren parallel aneinandergefügten, eine Fläche bildenden, eine Firstwand (20) als Obergurt, eine Bodenwand (22) als Untergurt und diese verbindende Querwände (24, 26) aufweisenden Plattformprofilen (16, 16ₐ bis 16_{c}) sowie mit wenigstens einem an einer Plattformkante angebrachten, Ausnehmungen oder Augen (14) für die Plattform haltende Gelenkbolzen od.dgl. Achsen aufweisenden Anschlußorgan (12), wobei sich der Längsschnitt der Plattform vom Anschlußorgan (12) weg verjüngt sowie den sich in ihrer Breite von/zu einer Anschlußhöhe (h, h₁) verjüngenden Plattformprofilen wenigstens ein Zwischenprofil (28, 28ₐ) mit in sich gleichbleibender Anschlußhöhe zugeordnet und an wenigstens eines der Plattformprofile anschließbar ausgebildet ist, und wobei Plattformprofil/e und Zwischenprofil/e jeweils als Strangpreßprofil ausgebildet sowie Ober- und Untergurt jeweils einends mit einer abragenden Anschlußrippe (30) sowie andernends mit einer abragenden Endleiste (32) versehen sind,
dadurch gekennzeichnet,
daß wenigstens eine Anschlußrippe (30) eines Profiles (16, 16ₐ bis 16_{c}; 28, 28ₐ, 28_{b}) mit einer an diesem in Abstand zugeordneten Lippenleiste (60) einen Klemmschlitz (62) für eine Endleiste (32) des benachbarten Profiles bildet.

2. Plattform nach Anspruch 1, dadurch gekennzeichnet, daß sich der Klemmschlitz (62) querschnittlich nach außen erweitert, insbesondere die Lippenleiste (60) querschnittlich nach außen gekrümmt ist.

3. Plattform nach Anspruch 1 oder 2, dadurch gekennzeichnet, daß die Anschlußrippe (30) mit der Lippenleiste (60) des Profils (16, 16ₐ bis 16_{c}; 28, 28ₐ, 28_{b}) eine Schweißfuge bildet, der die Endleiste (32) des benachbarten Profils als Badstütze zugeordnet ist.

4. Plattform nach Anspruch 3, dadurch gekennzeichnet, daß Anschlußrippe (30) und/oder Lippenleiste (60) und/oder Endleiste (32) mit wenigstens einer Hinterschneidung (31) für die Schweißfuge ausgestattet sind/ist.

5. Plattform nach wenigstens einem der Ansprüche 1 bis 4, gekennzeichnet durch Zwischenprofile (28, 28ₐ, 28_{b}) für zwei unterschiedliche Anschlußhöhen (h, h₁).

6. Plattform nach wenigstens einem der Ansprüche 1 bis 5, gekennzeichnet durch unterschiedliche Profilbreiten (i, i₁, i₂) der Zwischenprofile (28, 28ₐ, 28_{b}).

7. Plattform nach wenigstens einem der Ansprüche 1 bis 6, dadurch gekennzeichnet, daß wenigstens ein Zwischenprofil (28) in sich gleichbleibender Anschlußhöhe (h) als beidseits festliegendes Verbindungselement zwischen einem das Anschlußorgan (14) aufweisenden Anschlußprofil (12, 38, 38ₐ) und einem der sich verjüngenden Plattformprofile (16) angeordnet ist.

8. Plattform nach wenigstens einem der Ansprüche 1 bis 7, dadurch gekennzeichnet, daß mindestens ein Zwischenprofil (28ₐ, 28_{b}) in sich gleichbleibender Anschlußhöhe (h₁) als beidseits festliegendes Verbindungselement zwischen zwei sich verjüngenden Plattformprofilen (16ₐ, 16_{b}) angeordnet ist.

9. Plattform nach wenigstens einem der Ansprüche 1 bis 8, gekennzeichnet durch zumindest einen in einer Randausnehmung (42) des Anschlußprofils (38) lösbar festliegenden Anschlußkopf (40_{g}) als Anschlußorgan, der aus Stahl geformt sowie mit einer Sockelplatte (41) einen zum Obergurt (20) des Anschlußprofils (38) in einem Winkel (t) geneigten Profilsteg (24ₐ) angeschraubt ist, wobei von der Sockelplatte (41) in rechtwinkeligen Ebenen die Augen (14, 15) enthaltende Anschlußlaschen (46, 46ₜ) abragen.

10. Plattform nach wenigstens einem der Ansprüche 1 bis 8, gekennzeichnet durch zumindest einen in einer Randausnehmung (42) des Anschlußprofils (38, 38ₐ) lösbar festliegenden Anschlußkopf (40, 40ₐ) als Anschlußorgan, der als ein Strangpreßprofil aus einer Aluminiumlegierung und mit wenigstens einem ein Auge (14) anbietenden Zylinderbereich (46) ausgebildet ist, wobei der Anschlußkopf mit dem Anschlußprofil (38, 38ₐ) sowohl formschlüssig als auch kraftschlüssig verbunden ist.

11. Plattform nach Anspruch 10, dadurch gekennzeichnet, daß an den Zylinderbereich (46) des Anschlußkopfes (40ₐ) eine Kammrippe (58) mit abwärts geneigter Schrägfläche (57) angeformt ist und letztere einer gegenläufigen Pultfläche (56) an der Randausnehmung (42) des Anschlußprofils (38ₐ) aufliegt, wobei der Anschlußkopf andernends mit einem in einem Neigungswinkel (t) zum Obergurt (20) geneigten Profilsteg (24ₐ) des Anschlußprofils (38ₐ) verschraubt ist.

12. Plattform nach Anspruch 10, dadurch gekennzeichnet, daß von dem Zylinderbereich (46) des Anschlußkopfes (40) eine Rippe (53) in eine Nut (54) des Anschlußprofils (40) eingreift und der Anschlußkopf andernends mit einem in einem Neigungswinkel (t) zum Obergurt (20) geneigten Profilsteg (24ₐ) des Anschlußprofils (38) verschraubt ist.

13. Plattform nach Anspruch 11 oder 12, gekennzeichnet durch einen Neigungswinkel (t) zwischen dem Obergurt (20) und dem an ihn angeformten Profilsteg (24ₐ) von mehr als 90°, insbesondere etwa 120°.

14. Plattform nach Anspruch 10 oder 12, dadurch gekennzeichnet, daß die querschnittlich etwa dreiecksförmige Nut (54) für die gleichgestaltete Rippe (53) in einer Anformung (55) des Obergurtes (20) verläuft.

15. Plattform nach wenigstens einem der Ansprüche 10 bis 14, dadurch gekennzeichnet, daß der Anschlußkopf (40, 40ₐ) mit dem Obergurt (20) nahe dem Zylinderbereich (48), gegebenenfalls an der Anformung (55), verschraubt ist.

16. Plattform nach Anspruch 11 oder 13, dadurch gekennzeichnet, daß an den Zylinderabschnitt (48) etwa tangential zu dessen Auge (14) und als Begrenzung von dessen Schrägfläche (57) ein Steg (50ₐ) angeformt und zur Anlage an den Profilsteg (24ₐ) endwärts abgewinkelt ist.

17. Plattform nach einem der Ansprüche 12 bis 15, dadurch gekennzeichnet, daß an den Zylinderbereich (48) etwa in einer Durchmesserebene (E) ein Mittelsteg (50) angeformt und zur Anlage an den Profilsteg (24ₐ) endwärts abgewinkelt ist.

## Claims

1. Platform, more especially a loading tailboard (10) for vehicles, comprising a plurality of platform profiles (16, 16ₐ to 16_{c}) fitted parallel to one another and forming a surface, said profiles including a ridged board (20) as the upper belt, a bottom board (22) as the lower belt and transverse boards (24, 26) connecting said boards, as well as having at least one connecting means (12), which includes recesses or eyelets (14), fitted on a platform edge, for the link bolts or similar pins which retain the platform, the longitudinal section of the platform tapering away from the connecting means (12), as well as at least one intermediate profile (28, 28ₐ) being associated with the platform profiles, which taper in respect of their width from/to a connection height (h, h₁), at a constant connecting height and being configured to be connectable to at least one of the platform profiles, and platform profile(s) and intermediate profile(s) each being configured as an extruded profile as well as the upper and lower belts each being provided with a protruding connecting rib (30) at one end and with a protruding end bar (32) at the other end, characterised in that at least one connecting rib (30) of a profile (16, 16ₐ to 16_{c}; 28, 28ₐ, 28_{b}) forms, with a lip bar (60) associated with and at a spacing from said profile, a clamping slot (62) for an end bar (32) of the adjacent profile.

2. Platform according to claim 1, characterised in that the cross-section of the clamping slot (62) widens outwardly and, more especially, the cross-section of the lip bar (60) is curved outwardly.

3. Platform according to claim 1 or 2, characterised in that the connecting rib (30) forms, with the lip bar (60) of the profile (16, 16ₐ to 16_{c}; 28, 28ₐ, 28_{b}), a welded joint which is associated with the end bar (32) of the adjacent profile as a bath support.

4. Platform according to claim 3, characterised in that the connecting rib (30) and/or lip bar (60) and/or end bar (32) are/is provided with at least one undercut portion (31) for the welded joint.

5. Platform according to at least one of claims 1 to 4, characterised by intermediate profiles (28, 28ₐ, 28_{b}) for two different connecting heights (h, h₁).

6. Platform according to at least one of claims 1 to 5, characterised by different profile widths (i, i₁, i₂) of the intermediate profiles (28, 28ₐ, 28_{b}).

7. Platform according to at least one of claims 1 to 6, characterised in that at least one intermediate profile (28) is disposed at a constant connecting height (h) as a bilaterally securing connection member between a connecting profile (12, 38, 38ₐ), which includes the connecting means (14), and one of the tapering platform profiles (16).

8. Platform according to at least one of claims 1 to 7, characterised in that at least one intermediate profile (28ₐ, 28_{b}) is disposed at a constant connecting height (h₁) as a bilaterally securing connection member between two tapering platform profiles (16ₐ, 16_{b}).

9. Platform according to at least one of claims 1 to 8, characterised by at least one connecting head (40_{g}), which is detachably fixed in an edge recess (42) of the connecting profile (38), as the connecting means, said head being shaped from steel as well as being screw-connected to a profile web (24ₐ), which is inclined relative to the upper belt (20) of the connecting profile (38) at an angle (t), by means of a base plate (41), connecting lugs (46, 46ₜ) containing the eyelets (14, 15) and protruding from the base plate (41) in right-angled planes.

10. Platform according to at least one of claims 1 to 8, characterised by at least one connecting head (40, 40ₐ), which is detachably fixed in an edge recess (42) of the connecting profile (38, 38ₐ), as the connecting means, said head being configured as an extruded profile formed from an aluminium alloy and having at least one cylinder region (46) offering an eyelet (14), the connecting head being connected to the connecting profile (38, 38ₐ) both in a form-fitting manner and in a force-fitting manner.

11. Platform according to claim 10, characterised in that, on the cylinder region (46) of the connecting head (40ₐ), a grooved rib (58) is provided with a downwardly sloping inclined face (57), and the latter of an oppositely directed desk face (56) rests on the edge recess (42) of the connecting profile (38ₐ), the connecting head being screw-connected, at the other end, to a profile web (24ₐ) of the connecting profile (38ₐ), said web being inclined at an angle of inclination (t) relative to the upper belt (20).

12. Platform according to claim 10, characterised in that, from the cylinder region (46) of the connecting head (40), a rib (53) engages in a groove (54) of the connecting profile (40), and the connecting head is screw-connected, at the other end, to a profile web (24ₐ) of the connecting profile (38), said web being inclined at an angle of inclination (t) relative to the upper belt (20).

13. Platform according to claim 11 or 12, characterised by an angle of inclination (t) between the upper belt (20) and the profile web (24ₐ), provided thereon, of more than 90°, more especially substantially 120°.

14. Platform according to claim 10 or 12, characterised in that the groove (54), having a substantially triangularly-shaped cross-section for the identically shaped rib (53), extends in a moulding (55) of the upper belt (20).

15. Platform according to at least one of claims 10 to 14, characterised in that the connecting head (40, 40ₐ) is screw-connected to the upper belt (20) in the vicinity of the cylinder region (48), possibly at the moulding (55).

16. Platform according to claim 11 or 13, characterised in that, on the cylinder portion (48), substantially tangentially relative to the eyelet (14) thereof and as a defining means for the inclined face (57) thereof, a web (50ₐ) is provided and is endwisely angled for abutment against the profile web (24ₐ).

17. Platform according to one of claims 12 to 15, characterised in that, on the cylinder region (48), substantially in a diametrical plane (E), a central web (50) is provided and is endwisely angled for abutment against the profile web (24ₐ).

## Revendications

1. Plate-forme, en particulier hayon élévateur (10) pour véhicules, avec plusieurs profilés de plate-forme (16, 16a à 16c) disposés parallèlement les uns aux autres, assemblés les uns avec les autres, qui forment une surface et comportent une paroi supérieure (20) comme membrure supérieure, une paroi inférieure (22) comme membrure inférieure et des cloisons transversales (24, 26) reliant celles-ci, ainsi qu'avec au moins un organe de liaison (12) qui est monté sur un bord de la plate-forme et est pourvu d'évidements ou de bossages (14) pour des axes d'articulation ou des tourillons similaires tenant la plate-forme, la section longitudinale de la plate-forme diminuant du côté opposé à l'organe de liaison (12), au moins un profilé intermédiaire (28, 28a) dont la hauteur de raccordement est intrinsèquement constante étant associé aux profilés de plate-forme dont la largeur diminue de/jusqu'à une hauteur de raccordement (h, h1) et étant agencé de manière à pouvoir être raccordé à au moins un des profilés de plate-forme, le/les profilé/s de plate-forme et le/les profilé/s intermédiaires se présentant chaque fois sous la forme de profilés extrudés, les membrures supérieure et inférieure étant munies chacune d'une arête de liaison (30) saillante à une extrémité et d'une bordure d'extrémité (32) saillante à l'autre extrémité, caractérisée par le fait qu'au moins une arête de liaison (30) d'un profilé (16, 16a à 16c ; 28, 28a, 28b) forme avec une barrette (60) associée, disposée à une certaine distance, une fente de blocage (62) pour une bordure d'extrémité (32) du profilé contigu.

2. Plate-forme selon la revendication 1, caractérisée par le fait que la fente de blocage (62), en section transversale, s'élargit vers l'extérieur, en particulier que la barrette (60), en section transversale, est courbée en direction de l'extérieur.

3. Plate-forme selon la revendication 1 ou 2, caractérisée par le fait que l'arête de liaison (30) forme avec la barrette (60) du profilé (16, 16a à 16c ; 28, 28a, 28b) un joint de soudage auquel la bordure d'extrémité (32) du profilé contigu est associée en tant que fond de joint.

4. Plate-forme selon la revendication 3, caractérisée par le fait que l'arête de liaison (30) et/ou la bordure d'extrémité (32) est/sont pourvues d'au moins une contre-dépouille (31) pour le joint de soudage.

5. Plate-forme selon au moins une des revendications 1 à 4, caractérisée par des profilés intermédiaires (28, 28a, 28b) pour deux hauteurs de raccordement (h, h1) différentes.

6. Plate-forme selon au moins une des revendications 1 à 5, caractérisée par des largeurs de profilés (i, i1, i2) différentes pour les profilés intermédiaires (28, 28a, 28b).

7. Plate-forme selon au moins une des revendications 1 à 6, caractérisée par le fait qu'au moins un profilé intermédiaire (28) à hauteur de raccordement (h) intrinsèquement constante est disposé comme élément de liaison fixe des deux côtés entre un profilé de liaison (12, 38, 38a) comportant l'organe de liaison (14) et un profilé de plate-forme (16) effilé.

8. Plate-forme selon au moins une des revendications 1 à 7, caractérisée par le fait qu'au moins un profilé intermédiaire (28a, 28b) à hauteur de raccordement intrinsèquement constante est disposé comme élément de liaison fixe des deux côtés entre deux profilés de plate-forme (16) effilés.

9. Plate-forme selon au moins une des revendications 1 à 8, caractérisée par au moins une tête de liaison (40g) montée de manière séparable dans un évidement périphérique (42) du profilé de liaison (38) en tant qu'organe de liaison, laquelle tête de liaison est réalisée en acier et est vissée par une plaque-semelle (41) à une cloison de profilé (24a) inclinée d'un angle (t) par rapport à la membrure supérieure (20) du profilé de liaison (38), des pattes de liaison (46, 46t) portant les bossages (14, 15) faisant saillie dans des plans orthogonaux sur la plaque-semelle (41).

10. Plate-forme selon au moins une des revendications 1 à 8, caractérisée par au moins une tête de liaison (40g) montée de manière séparable dans un évidement périphérique (42) du profilé de liaison (38) en tant qu'organe de liaison, laquelle tête de liaison est réalisée sous la forme d'un profilé extrudé en un alliage d'aluminium et comporte au moins une partie cylindrique (46) formant un bossage (14), la tête de liaison étant liée par complémentarité de formes et par adhérence au profilé de liaison (38, 38a).

11. Plate-forme selon la revendication 10, caractérisée par le fait qu'une arête (58) avec une surface inclinée (57) vers le bas est formée sur la partie cylindrique (46) de la tête de liaison (40a) et que celle-ci repose sur une surface inclinée (56) opposée dans l'évidement périphérique (42) du profilé de liaison (38a), la tête de liaison étant vissée à l'autre extrémité à une cloison de profilé (24a) du profilé de liaison (38a), inclinée d'un angle (t) par rapport à la membrure supérieure (20).

12. Plate-forme selon la revendication 10, caractérisée par le fait que sur la partie cylindrique (46) de la tête de liaison (40), une nervure (53) s'engage dans une rainure (54) du profilé de liaison (40) et que la tête de liaison est vissée à l'autre extrémité à une cloison de profilé (24a) du profilé de liaison (38a), inclinée d'un angle (t) par rapport à la membrure supérieure (20).

13. Plate-forme selon la revendication 1 ou 12, caractérisée par un angle d'inclinaison (t) entre la membrure supérieure (20) et la cloison de profilé (24a) attenante supérieur à 90°, plus particulièrement d'environ 120°.

14. Plate-forme selon la revendication 10 ou 12, caractérisée par le fait que la rainure (54) à section transversale sensiblement triangulaire recevant la nervure (53) de même forme est aménagée dans un renflement (55) de la membrure supérieure (20).

15. Plate-forme selon au moins une des revendications 10 à 14, caractérisée par le fait que la tête de liaison (40, 40a) est vissée à la membrure supérieure (20) dans le voisinage de la partie cylindrique (48), le cas échéant au renflement (55).

16. Plate-forme selon la revendication 11 ou 13, caractérisée par le fait qu'une cloison (50a) est aménagée sur la partie cylindrique (48), sensiblement tangentiellement au bossage (14) de celle-ci, comme délimitation de sa surface inclinée (57), et est pliée vers le bas afin de venir en appui sur la cloison de profilé (24a).

17. Plate-forme selon une des revendications 12 à 15, caractérisée par le fait qu'une cloison médiane (50) est aménagée sur la partie cylindrique (48), sensiblement dans le plan diamétral (E) et est pliée en direction de l'extrémité afin de venir en appui sur la cloison de profilé (24a).
